# EUROPÄISCHE PATENTANMELDUNG

(11) **EP 4 215 305 A1**
(43) Veröffentlichungstag der Anmeldung: **26.07.2023**
(21) Anmeldenummer: 23153194.8
(22) Anmeldetag: 25.01.2023
(51) Int. Cl.: B23C 5/00, B23C 5/10, B23B 51/02

(54) **ROTIERENDES TRÄGERWERKZEUG**

(30) Priorität: 25.01.2022 DE 102022101647
(71) Anmelder: KSB SE & Co. KGaA, 67227 Frankenthal (DE)
(72) Erfinder: NOBEL, Tammuz, 67227 Frankenthal (DE)

(57) **Zusammenfassung**

Die Erfindung betrifft ein rotierendes Trägerwerkzeug (1) zur Aufnahme von Wendeschneidplatten (5) mit einer konventionell gefertigten Aufnahme (2) und einem generativ gefertigten Hauptkörper (3). Der Hauptkörper (3) weist mindestens zwei Segmente (4) auf. Zwischen zwei Segmenten (4) wird je ein offener Hohlraum (6) zum Abführen von Schneidmaterial gebildet. Der Hohlraum (6) weist einen um die Werkzeugachse (7) gewundenen Verlauf auf.

## Beschreibung

Die Erfindung betrifft ein rotierendes Trägerwerkzeug zur Aufnahme von Wendeschneidplatten mit einer konventionell gefertigten Aufnahme und einem generativ gefertigten Hauptkörper, wobei der Hauptkörper mindestens zwei Segmente aufweist und zwischen zwei Segmenten je ein offener Hohlraum zum Abführen von Schneidmaterial gebildet wird.

Zerspanendes Werkzeug ist der Sammelbegriff für eine Gruppe von Werkzeugen, die Werkstücken eine bestimmte geometrische Form geben. Dabei wird von den Werkstücken überschüssiges Material auf mechanischem Weg in Form von Spänen abgehoben. Beim Zerspanen dringt die Schneide des Zerspanungswerkzeugs in das Werkstück ein und trägt die Späne ab.

Fräsmaschinen sind zerspanende Werkzeugmaschinen, die mittels rotierender Schneidwerkzeuge Material von einem Werkstück zerspanend abtragen, um es in die gewünschte Form zu bringen. Beim Fräsen stehen mindestens drei verschiedene Vorschubrichtungen zur Verfügung, um die Fertigung komplexer Körper zur realisieren.

Drehmaschinen sind Werkzeugmaschinen, die rotationssymmetrische Werkstücke herstellen, unter Rotation entweder des Werkstücks oder des Werkzeugs.

Ein zerspanendes Werkzeug umfasst eine Aufnahme und einen Hauptkörper. Die Aufnahme ist so gestaltet, dass eine sichere Verbindung des Werkzeugs mit der Werkzeugmaschine und gegebenenfalls ein schneller Werkzeugwechsel realisiert werden können. Der Hauptkörper weist mindestens eine Schneidplatte auf. Schneidplatten besitzen mindestens eine Schneidkante. Der Schneidstoff, aus dem sie gefertigt sind, wird je nach Material des zu zerspanenden Werkstücks gewählt. Verbreitet sind Schnellarbeitsstahl, Hartmetall, Keramik oder polykristallines kubisches Bornitrid.

Im Wesentlichen unterscheidet man zwischen Vollfräswerkzeugen und Trägerwerkzeugen für Wendeschneidplatten. Trägerwerkzeuge sind meist aus mittelfesten, unvergüteten Stählen hergestellte Aufnahmen für Wendeschneidplatten. Die Schneidplatten aus Hartmetall, Keramik oder Diamant sind entweder einzeln angeschraubt oder geklemmt und können je nach Geometrie der Schneidplatte mehrmals wiederverwendet werden.

Die Aufnahme des Werkzeugs wird in der Regel konventionell über Urformen und/oder Umformen gefertigt. Hierbei wird entweder durch Abtragung oder Veränderung des Ausgangsmaterials die gewünschte Form erreicht. Dazu zählen Methoden wie Gießen, Pressen, Drehen oder Fräsen. Da die Form und Struktur der Aufnahme keine so hohe Komplexität aufweisen, bietet sich hier die günstige und bewährte konventionelle Fertigung der Werkzeugaufnahme an.

Die generative Fertigung erlaubt die Fertigung von Werkzeugen und Bauteilen mit einem deutlich höheren Komplexitätsgrad. Mit Hilfe von IT-basierten Werkzeugmaschinen werden aus einem oder mehreren flüssigen oder festen Werkstoffen schichtweise dreidimensionale Gegenstände erzeugt. Dabei finden verschiedene physikalische oder chemische Härtungs- oder Schmelzprozesse statt. Dieses Verfahren findet gerade auch im Werkzeugbau immer weitere Verbreitung und erlaubt ein zunehmend anspruchsvolleres Design. Zur Bearbeitung von Metall werden in der generativen Fertigung bevorzugt das Laserstrahlschmelzen, das Elektronenstrahlschmelzen und das Lasersintern eingesetzt.

In der EP 1 864 748 B1 wird ein Verfahren zur Herstellung eines Zerspanwerkzeuges, dessen Werkzeuggrundkörper generativ gefertigt ist, beschrieben. Als besondere Vorteile des generativen Fertigungsprozesses sind vor allem folgende Vorteile anzumerken: Uneingeschränkte geometrische Formgebung des Hauptkörpers, reduzierter Konstruktionsaufwand, Verkürzung der Herstellungszeit, leichtere Fertigung kleinerer Stückzahlen.

Beim Prozess der Zerspanung müssen die dabei entstehenden Späne abtransportiert werden. Dies geschieht durch einen speziell dafür vorgesehenen Abfuhrkanal, der meist vor einer Schneidplatte platziert ist. Die Schneidwerkzeuge sind übereinander auf einer Achse angeordnet und der spanabführende Kanal verläuft auf gerader Linie zwischen ihnen. Dies wird beispielsweise in der EP 0 855 257 A2 beschrieben.

Diese Art der Konstruktion führt zu mehreren Problemen. Die Späne können sich beim Abtransport ineinander verkeilen, sodass der Kanal blockiert ist und die Späne im Werkzeug verbleiben. Dies kann zum Stillstand der Maschine führen. Ein unvollständiger Abtransport minimiert die Leistung der Zerspanungsmaschine, da nicht die größtmögliche Menge an Spänen abgeführt wird und eventuell die Rotationsgeschwindigkeit beeinträchtigt werden könnte. Späne, die nicht durch den Abfuhrkanal aufgenommen werden, können zur Beschädigung der Maschine führen. Grundsätzlich kann ein zu langsamer und unvollständiger Abtransport zu Beschädigungen und Leistungseinbußen des Werkzeugs führen. Die präzise Zerspanung kann durch die Einwirkung unkontrolliert auftreffender Späne ungünstig beeinflusst werden, wenn sie zwischen Schneidplatte und zu zerspanendes Werkstück gelangen. Durch Späne, die nicht im Abfuhrkanal aufgenommen werden, ist die Arbeitssicherheit gefährdet. Die Späne werden meist in einem speziell dafür vorgesehenen Behälter gesammelt bzw. in einem Späneförderer abtransportiert. Je genauer die Späne in die Spansammelbehälter geleitet werden, desto reibungsloser läuft der Zerspanungsprozess ab.

Um diesen Problemen entgegenzuwirken wurde zum Beispiel in der EP 0 479 776 B1 eine besondere Art der Spanabsaugungseinrichtung vorgeschlagen, die jedoch eine spezielle Konstruktion erfordert.

Aufgabe der Erfindung ist es, ein rotierendes, zerspanendes Werkzeug anzugeben, das einen optimalen Abtransport des anfallenden Spanmaterials gewährleistet. Dabei soll das Werkzeug individuell an die Zerspanungsaufgabe angepasst werden können. Darüber hinaus soll das Werkzeug sowohl schnell als auch günstig hergestellt werden können und sich möglichst langlebig als auch zuverlässig im Einsatz bewähren.

Diese Aufgabe wird erfindungsgemäß durch ein rotierendes Trägerwerkzeug gelöst. Bevorzugte Varianten sind den nebengeordneten Hauptansprüchen, den Unteransprüchen, der Beschreibung und den Zeichnungen zu entnehmen.

Erfindungsgemäß weist der Hohlraum einen um die Werkzeugachse gewundenen Verlauf auf.

Bei der generativen Fertigung wird im Hauptkörper durch Aussparung beim Materialauftrag ein Hohlraum geschaffen, der idealerweise eine 90 ° Öffnung nach außen hat. Die Form des Hohlraums ist im Inneren abgerundet und weist weder scharfe Kanten noch starre Abwinklungen auf, die typischerweise bei Bohrungen unvermeidbar sind.

Der sich über die ganze Länge des Hauptkörpers erstreckende Hohlraum windet sich um die Werkzeugachse.

Die zwischen den Hohlräumen liegenden Segmente sind Teile des Hauptkörpers, der generativ in einem Stück gefertigt ist. Auf den Außenflächen der Segmente befinden sich die Schneidebenen mit den Schneidplatten. Bei der Erfindung sind mindestens zwei Segmente axial angeordnet. Die Zahl der Hohlräume entspricht vorzugsweise der Anzahl der Segmente. Da die Hohlräume zum Abtransport der Späne zwischen den Schneidebenen angeordnet sind, verlaufen sie zwischen den Segmenten.

Bei der generativen Fertigung des Hauptkörpers wird vorzugsweise mindestens ein Hohlraum auf der Schneidebene zwischen den Wendeschneidplatten ausgespart. Die radiale Ausdehnung und die Form des Hohlraums richten sich idealerweise nach der Menge bzw. dem Volumen der abzuführenden Späne. Dies wird durch das Material des zu bearbeitenden Werkstoffs und die Konstruktion des Trägerwerkzeugs bedingt. Je größer die Späne sind desto größer muss die radiale Ausdehnung des Hohlraums sein, damit ihr reibungsloser Abtransport zuverlässig gewährleistet werden kann.

Die Form des Hohlraums wird durch die Lage und Form des Schneidplattenträgers bzw. durch die Form der Wendeschneidplatten definiert. Eine bevorzugte Ausformung sieht einen Querschnitt in Form eines abgerundeten Dreiecks vor, da die Wendeschneidplatte bzw. der Schneidplattenträger meist gerade Kanten aufweisen und der Hohlraum vorzugsweise zwischen ihnen verläuft. Bei einer generativen Fertigung des Hauptkörpers sind auch andere Formen leicht umsetzbar.

Der Materialabtrag erfolgt bevorzugt durch ein sich um die Längsachse drehendes Werkzeug. Beim Umfangsfräsen befindet sich die Werkzeugachse parallel zur Arbeitsebene. Mit einer Zustellbewegung zum Werkstück und einer anschließenden Vorschubbewegung beginnt der Zerspanvorgang. Dabei dreht sich das Werkzeug um die Werkzeugachse. Dies kann entweder gleichläufig oder gegenläufig zur Vorschubrichtung der Arbeitsebene erfolgen.

Je ein offener Hohlraum erstreckt sich optimalerweise über die gesamte Länge des Hauptkörpers, um den Abtransport der Späne an allen Wendeschneidplatten zu gewährleisten, die sich in radialer Richtung auf den Segmenten des Hauptkörpers verteilen.

Der Hohlraum weist mindestens eine schraubenförmige Drehung bzw. Windung von 180 °, vorzugsweise mindestens eine Drehung von 270 °, insbesondere mindestens eine Drehung von 360 °, um die Werkzeugachse auf. Beim mechanischen Abrieb werden dadurch die Späne in den Hohlraum geschleudert. Ihre kinetische Energie reicht aus, um sie durch den gedrehten Hohlraum abzuleiten.

Der offene Hohlraum beschreibt dabei idealerweise eine Kurve, die sich mit konstanter Steigung um den Mantel des zylindrischen Hauptkörpers windet. Diese helixförmige Struktur des offenen Hohlraums minimiert den Energieverlust der in Rotation versetzten abgehobenen Späne auf ihrem Weg aus dem Werkzeug. Hierdurch wird das Strömungsverhalten der Späne optimiert. Durch den idealen Spanabtransport können Verstopfungen durch verklumpendes Material vermieden und ein guter Spanabtrag erreicht werden.

An den Außenseiten der Segmente sind die Wendeschneidplatten des Werkzeugs befestigt. Die Ebene, auf der der Abtrag des zu zerspanenden Materials durch die Wendeschneidplatten stattfindet, wird als Arbeitsebene bezeichnet. Jede Schneidebene enthält mindestens eine Wendeschneidplatte des Werkzeugs. Jedes zerspanende Werkzeug besitzt mindestens eine Schneidebene.

Bei einer vorteilhaften Variante der Erfindung weist der Hauptkörper mindestens zwei, vorzugsweise mindestens drei, insbesondere mindestens vier, Schneidebenen auf, die axial versetzt auf dem Hauptkörper angeordnet sind.

Die Schneidebenen sind vorzugsweise hintereinander angeordnet, um einen möglichst idealen Zerspanvorgang zu gewährleisten. Durch die versetzte Anordnung der Schneidebenen besteht die Möglichkeit die Späne durch den gewundenen offenen Hohlraum direkt am Ort ihrer Entstehung abzutransportieren.

Jede Schneidebene weist mindestens eine, vorzugsweise mehr als zwei, insbesondere mehr als drei, Wendeschneidplatte auf, um eine möglichst genaue Zerspanung des Werkstücks zu erreichen.

Der helixförmige Verlauf des Hohlraums erfordert, dass die Schneidebenen auf der Außenseite des Hauptkörpers um mehr als 15 °, vorzugsweise mehr als 25 °, insbesondere mehr als 40 °, versetzt zueinander angeordnet sind.

Kürzere Schneidkanten erzeugen beim Abrieb kleinere Späne, die leichter abtransportiert werden können, da die Gefahr einer Stauung vermindert wird. Die versetzte Anordnung der Schneidebenen ermöglicht eine möglichst passgenaue Bearbeitung des Werkstücks. Anzahl der Schneidebenen und Form der Wendeschneidplatten können an die Zerspanungsaufgabe flexibel angepasst werden und können so die Effizienz des Werkzeugs steigern.

Bei einer günstigen Variante der Erfindung kann der Hauptkörper einen Kühlmittelkanal mit einer röhrenförmigen Struktur aufweisen.

Die röhrenförmige Struktur ist vorzugsweise als ein längerer zylindrischer Hohlkörper zum Transport von Flüssigkeiten oder Gasen ausgebildet. Die Form der Röhre ist komplex ausgeführt und weist weder scharfe Kanten noch starre Abwinklungen auf, die typischerweise bei Bohrungen unvermeidbar sind.

Die Windungen der röhrenförmigen Struktur weisen vorzugsweise die Kontur eines Bogens bzw. eines leicht geschwungenen Bogens auf. Diese Windungen begünstigen eine ablösungsfreie und verwirbelnde Strömungsführung des Kühlmittels.

Bei einer vorteilhaften Variante der Erfindung weisen die Windungen der röhrenförmigen Struktur einen unregelmäßigen gekrümmten Verlaufs eines Bogens auf, der beispielsweise den Verlauf einer sanften Biegung, einer harmonischen Krümmung und/oder flach gewölbten Kurve beschreibt.

Der Kühlmittelkanal weist vorzugsweise innerhalb des Hauptkörpers mindestens eine Eintrittsöffnung und mindestens eine Austrittsöffnung auf, wobei er die Eintrittsöffnung mit der Austrittsöffnung direkt verbindet.

Der Verlauf des Kühlmittelkanals im Hauptkörper orientiert sich nach dem Prinzip der Strukturbionik an biologischen Vorbildern. So soll erreicht werden, dass der Kühlmittelkanal im Inneren des Hauptkörpers parallel zu dessen Außenfläche geführt wird, um die Stabilität des Werkzeugs zu erhöhen.

Als Verfahren zur Herstellung eines rotierenden Trägerwerkzeugs mit einem additiv gefertigten Hauptkörper wird ein additives Fertigungsverfahren gewählt. Die Bezeichnung additives Fertigungsverfahren umfasst alle Fertigungsverfahren, bei denen Material Schicht für Schicht aufgetragen wird. So wird beispielsweise der gewundene Verlauf jedes offenen Hohlraums durch selektives Einwirken einer Strahlung auf ein Aufbaumaterial erzeugt. Dabei erfolgt der schichtweise Aufbau computergesteuert aus einem oder mehreren flüssigen oder festen Werkstoffen nach vorgegebenen Maßen und Formen. Beim Aufbau finden physikalische oder chemische Härtungs- oder Schmelzprozesse statt. Typische Werkstoffe für das 3D-Drucken sind Kunststoffe, Kunstharze, Keramiken, Metalle, Carbon- und Graphitmaterialien.

Für die Ausbildung des Hauptkörpers werden insbesondere das selektive Laserschmelzen und das Cladding, auch bekannt als Auftragsschweißen, angewandt.

Beim selektiven Laserschmelzen wird ein Hauptkörper eines rotierenden Trägerwerkzeugs nach einem Verfahren hergestellt, bei dem zunächst eine Schicht eines Aufbaumaterials auf der Aufnahme aufgebracht wird. Vorzugsweise handelt es sich bei dem Auf-baumaterial zur Herstellung des Hauptkörpers um metallische Pulverteilchen. Bei einer Variante der Erfindung werden dazu eisenhaltige und/oder kobalthaltige Pulverpartikel eingesetzt. Diese können Zusätze wie Chrom, Molybdän oder Nickel enthalten. Der metallische Aufbauwerkstoff wird in Pulverform in einer dünnen Schicht auf eine Platte auf-gebracht. Dann wird der pulverförmige Werkstoff mittels einer Strahlung an den jeweils gewünschten Stellen lokal vollständig aufgeschmolzen und es bildet sich nach der Er-starrung eine feste Materialschicht. Anschließend wird die Aufnahme um den Betrag einer Schichtdicke abgesenkt und es wird erneut Pulver aufgetragen. Dieser Zyklus wird so lange wiederholt, bis alle Schichten hergestellt sind und der fertige Strömungsraum bzw. der fertige Hauptkörper entstanden ist.

Als Strahlung kann beispielsweise ein Laserstrahl zum Einsatz kommen, welcher den Hauptkörper aus den einzelnen Pulverschichten generiert. Die Daten zur Führung des Laserstrahls werden auf der Grundlage eines 3D-CAD-Körpers mittels einer Software erzeugt. Alternativ zu einem selektiven Laserschmelzen kann auch ein Elektronenstrahl (EBN) zum Einsatz kommen.

Beim Auftragsschweißen oder Cladding wird der Hauptkörper nach einem Verfahren hergestellt, das ein Anfangsstück durch Schweißen beschichtet. Das Auftragsschwei-βen baut dabei durch einen Schweißzusatzwerkstoff in Form von einem Draht oder einem Pulver ein Volumen auf, das eine besonders filigrane und optimierte Form des Hauptkörpers mit strukturbionisch verlaufenden Kühlmittelkanälen realisiert.

Bei einer besonders vorteilhaften Variante der Erfindung wird der Hauptkörper mit seinen Transportkanälen in Form von offenen Hohlräumen und Segmenten aus einem Aufbaumaterial durch aufeinanderfolgendes Schmelzen und Erstarren von Schichten mittels Strahlung hergestellt. Die unterschiedlichen Eigenschaften der Kanäle und der Segmente werden dabei durch Variationen der Strahlung generiert. Durch gezielte Steuerung der lokalen Wärmeeinbringung wird bereits beim Bau eine Modifizierung der Werkstoffeigenschaften vorgenommen. Dadurch gelingt es in einem Bereich des Hauptkörpers Zonen und Gefüge unterschiedlicher Werkstoffzustände eines chemisch-homogenen Werkstoffs und damit unterschiedlicher Eigenschaften zu erzeugen.

Der Hauptkörper kann in einer Variante der Erfindung aus unterschiedlichem Aufbaumaterial gebildet werden. Das Aufbaumaterial umfasst vorzugsweise metallische Pulverteilchen, insbesondere niedriglegierte und/oder hochlegierte Stahlpulverteilchen und/oder einen Metall-Polymer-Hybridwerkstoff.

Erfindungsgemäß wird das rotierende Trägerwerkzeug mit einer konventionell gefertigten Aufnahme und einem generativ gefertigten Hauptkörper zum spanabhebenden Bearbeiten mit idealer Spanabfuhr in Fräs-, Dreh- oder Bohrmaschinen verwendet.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine perspektivische Darstellung eines Fräsers nach dem Stand der Technik,
- Fig. 2: eine perspektivische Darstellung des Hauptkörpers eines erfindungsgemäßen Fräsers,
- Fig. 3: eine perspektivische Darstellung der Spitze eines Fräsers,
- Fig. 4: eine Seitenansicht des Fräsers,
- Fig. 5: eine Detaildarstellung der Schneidebenen des Hauptkörpers.

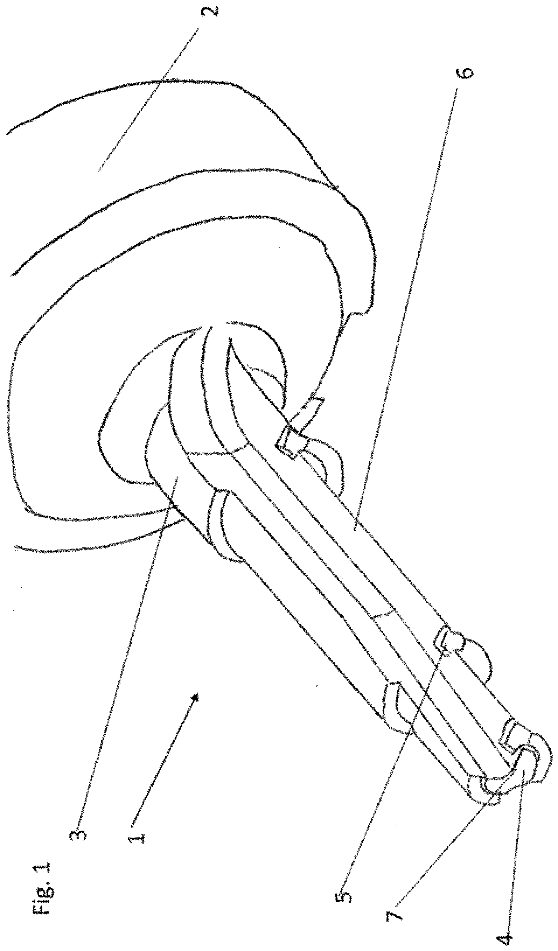

Fig. 1 zeigt eine perspektivische Darstellung eines Fräsers nach dem Stand der Technik. Fig. 1 zeigt ein rotierendes zerspanendes Werkzeug 1 mit einer konventionell gefertigten Aufnahme 2 und einem konventionell gefertigten Hauptkörper 3 mit zwei Segmenten 4. Der Hauptkörper 3 weist in dieser Ausführungsvariante drei Schneidebenen 10 mit jeweils zwei Wendeschneidplatten 5 auf.

Das Werkzeug 1 kann mit der Aufnahme 2 in einer nicht dargestellten Zerspanungsmaschine eingespannt werden. Der für den Abtransport des Schneidmaterials vorgesehene offene Hohlraum 6 verläuft in gerader Linie entlang der Werkzeugachse 7 des Hauptkörpers 3 zwischen zwei Segmenten 4. Das Schneidmaterial entsteht in Form von Spänen beim Zerspanungsvorgang, wenn die Wendeschneidplatten 5 auf das zu bearbeitende Werkstück treffen.

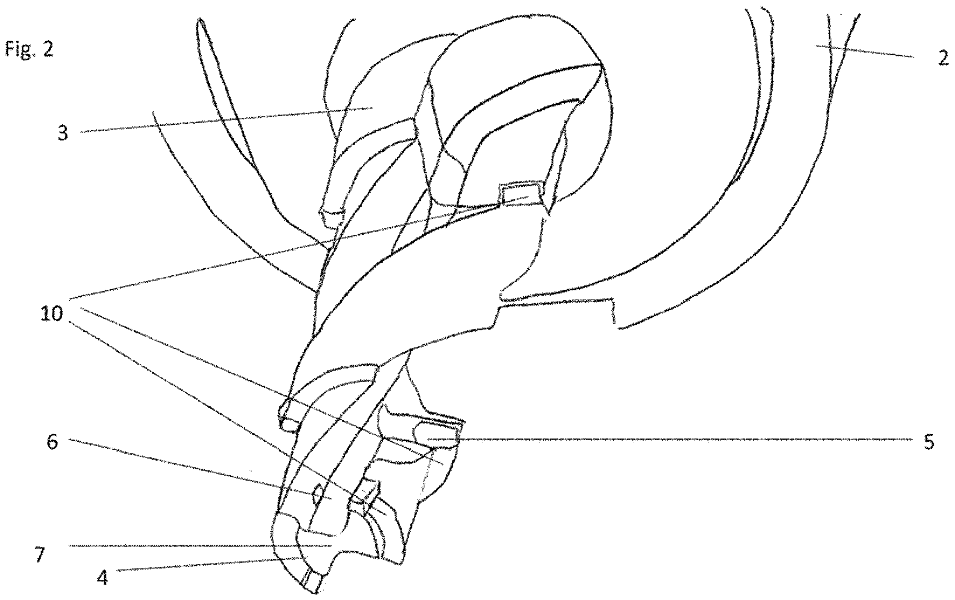

Fig. 2 zeigt eine perspektivische Darstellung des Hauptkörpers eines erfindungsgemä-βen Fräsers. Hier ist der generativ gefertigte Hauptkörper 3 mit einem um die Werkzeugachse 7 gewundenen Hohlraum 6 dargestellt. Der offene und sich windende Hohlraum 6 verläuft erfindungsgemäß zwischen zwei Segmenten 4. Auf den hintereinander angeordneten Schneidebenen 10 sind die Wendeschneidplatten 5 befestigt. Auf jeder Schneidebene 10 liegen zwei Schneidplatten 5. Die Schneidebenen 10 sind um 20 ° versetzt zueinander angeordnet, sodass der offene Hohlraum 6 einmal komplett in Form einer schraubenförmigen Helix den Hauptkörper 3 umwindet. Die zwei Wendeschneidplatten 5 jeder Schneidebene 10 sind um 180 ° zueinander versetzt.

Die Späne werden mit Hilfe der während des Zerspanungsvorgangs entstehenden kinetischen Energie durch den offenen Hohlraum 6 geleitet. Dieser endet am Übergang vom Hauptkörper 3 zur Aufnahme 2. Hier verlassen die Späne mit Wucht das Werkzeug.

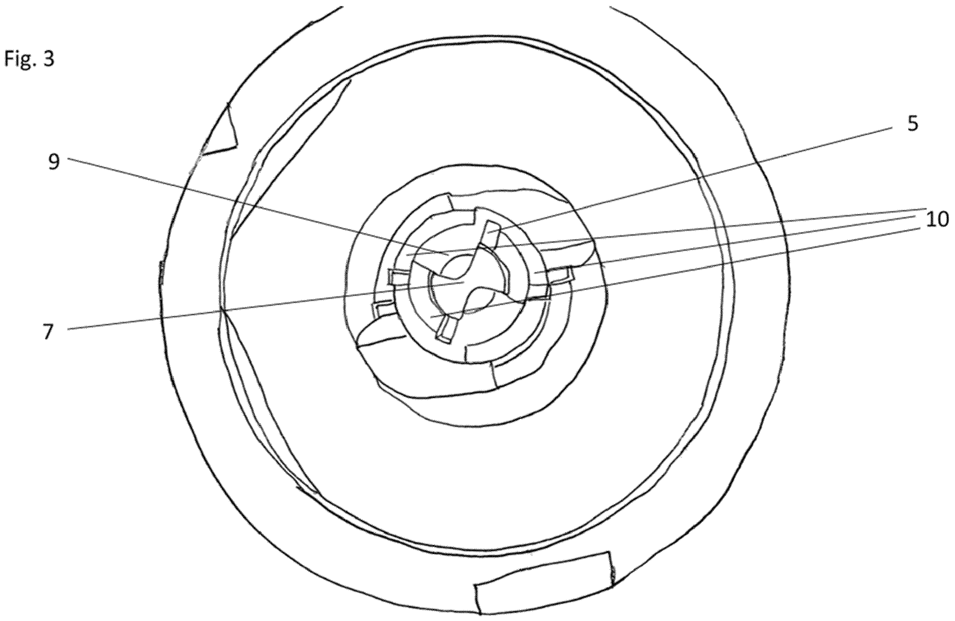

Fig. 3 zeigt eine perspektivische Darstellung der Spitze eines Fräsers. Die drei Schneidebenen 10 sind hintereinander angeordnet und die Wendeschneidplatten 5 befinden sich auf jedem Segment 4 um 180 ° zueinander versetzt. Der offene und sich um die Werkzeugachse 7 windende Hohlraum 6 weist zwischen den Schneidebenen 10 in dieser Darstellung einen Querschnitt 9 in Form eines abgerundeten Dreiecks auf.

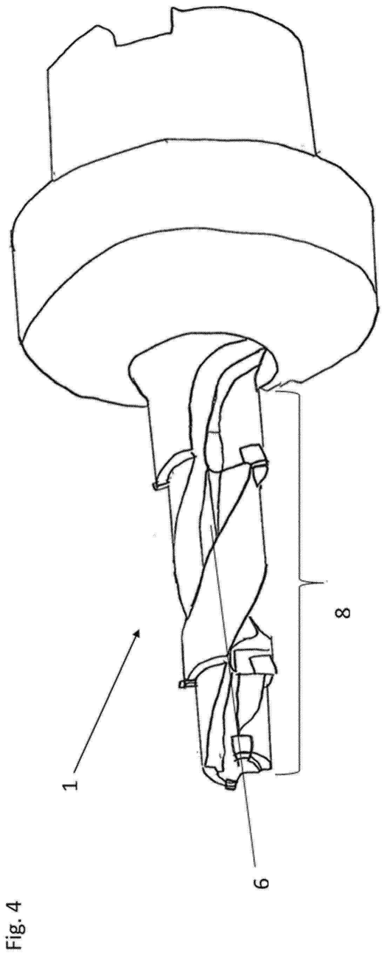

Fig. 4 zeigt eine Seitenansicht des Fräsers. Der offene Hohlraum 6 erstreckt sich über die gesamte Länge 8 des Hauptkörpers 3. Idealerweise beschreibt er hierbei eine helixförmige 360 ° Windung um die Werkzeugachse 7. Somit ist der offene Hohlraum 6 in dieser Ausführungsform schraubenförmig ausgebildet und weist mindestens eine Windung um die Werkzeugsachse 7 zur idealen Abfuhr des Spanmaterials auf.

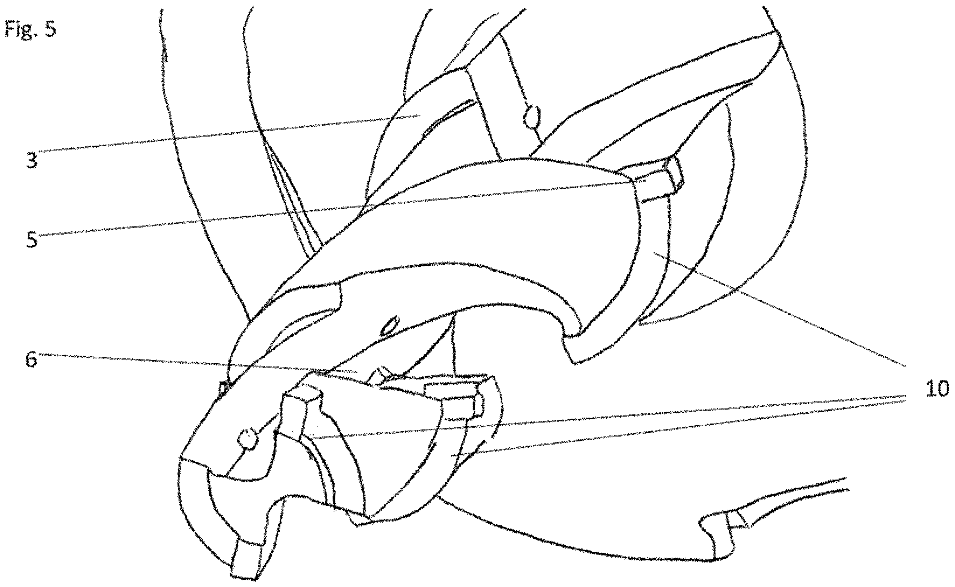

Fig. 5 zeigt eine Detaildarstellung der Schneidebenen 10 des Hauptkörpers 3. Auf den hintereinander angeordneten Schneidebenen 10 sind die Wendeschneidplatten 5 befestigt. Auf jeder Schneidebene 10 liegen zwei Wendeschneidplatten 5. Die Schneidebenen 10 sind um 30 ° versetzt zueinander angeordnet, sodass der offene, schraubenförmig verlaufende Hohlraum 6 einmal komplett in Form einer Helix den Hauptkörper 3 umrundet. Die zwei Wendeschneidplatten 5 jeder Schneidebene 10 sind um 180 ° zueinander versetzt.

## Patentansprüche

1. Rotierendes Trägerwerkzeug (1) zur Aufnahme von Wendeschneidplatten (5) mit einer konventionell gefertigten Aufnahme (2) und einem generativ gefertigten Hauptkörper (3), wobei der Hauptkörper (3) mindestens zwei Segmente (4) aufweist und zwischen zwei Segmenten (4) je ein offener Hohlraum (6) zum Abführen von Schneidmaterial gebildet wird,
**dadurch gekennzeichnet,**
**dass** der Hohlraum (6) einen um die Werkzeugachse (7) gewundenen Verlauf aufweist.

2. Trägerwerkzeug nach Anspruch 1, **dadurch gekennzeichnet, dass** sich der Hohlraum (6) über die Länge (8) des Hauptkörpers (3) erstreckt.

3. Trägerwerkzeug nach Anspruch 1 oder 2, **dadurch gekennzeichnet, dass** der Hohlraum (6) mindestens eine Drehung von 180 °, vorzugsweise mindestens eine Drehung von 270 °, insbesondere mindestens eine Drehung von 360 °, um die Werkzeugachse (7) aufweist.

4. Trägerwerkzeug nach einem der Ansprüche 1 bis 3, **dadurch gekennzeichnet, dass** der Hohlraum (6) einen Querschnitt (9) in Form eines abgerundeten Dreiecks aufweist.

5. Trägerwerkzeug nach einem der Ansprüche 1 bis 4, **dadurch gekennzeichnet, dass** der Hohlraum (6) einen helixförmigen Verlauf aufweist.

6. Trägerwerkzeug nach einem der Ansprüche 1 bis 5, **dadurch gekennzeichnet, dass** der Hohlraum (6) einen schraubenförmigen Verlauf aufweist.

7. Trägerwerkzeug nach einem der Ansprüche 1 bis 6, **dadurch gekennzeichnet, dass** der Hauptkörper (3) mindestens zwei, vorzugsweise mindestens drei, insbesondere mindestens vier, Schneidebenen (10) aufweist.

8. Trägerwerkzeug nach Anspruch 7, **dadurch gekennzeichnet, dass** die Schneidebenen (10) hintereinander angeordnet sind.

9. Trägerwerkzeug nach Anspruch 7 oder 8, **dadurch gekennzeichnet, dass** eine Schneidebene (10) mindestens eine, vorzugsweise mehr als zwei, insbesondere mehr als drei, Wendeschneidplatte (5) aufweist.

10. Trägerwerkzeug nach einem der Ansprüche 7 bis 9, **dadurch gekennzeichnet, dass** die Schneidebenen (10) um mehr als 15 °, vorzugsweise mehr als 25 °, insbesondere mehr als 40 °, versetzt zueinander angeordnet sind.

11. Verfahren zur Herstellung eines rotierenden Trägerwerkzeugs (1), **dadurch gekennzeichnet, dass** der gedrehte Verlauf jedes Hohlraums (6) im Hauptkörper durch selektives Einwirken einer Strahlung auf ein Aufbaumaterial erzeugt wird.

12. Verwendung eines rotierenden Trägerwerkzeugs (1) mit einer konventionell gefertigten Aufnahme (2) und einem generativ gefertigten Hauptkörper (3) zum spanabhebenden Bearbeiten mit idealer Spanabfuhr in Fräs-, Dreh- oder Bohrmaschinen.
